# EUROPÄISCHE PATENTSCHRIFT

(11) **EP 2 076 415 B1**
(45) Veröffentlichungstag und Bekanntmachung des Hinweises auf die Patenterteilung: **14.08.2013**
(21) Anmeldenummer: 07820701.6
(22) Anmeldetag: 28.09.2007
(51) Int. Cl.: B60S 1/04

(54) **ANORDNUNG EINER EINRICHTUNG ZUM REINIGEN BZW. WISCHEN EINER SCHEIBE EINES FAHRZEUGS**
ARRANGEMENT OF AN APPARATUS FOR CLEANING AND/OR WIPING A WINDSCREEN OF A VEHICLE
AGENCEMENT D'UN DISPOSITIF POUR NETTOYER OU ESSUYER UNE VITRE D'UN VÉHICULE

(30) Priorität: 04.10.2006 DE 102006046909; 31.07.2007 DE 102007035746
(43) Veröffentlichungstag der Anmeldung: 08.07.2009
(73) Patentinhaber: Robert Bosch GmbH, 70442 Stuttgart (DE)
(72) Erfinder: VOLZ, Heiko, 76135 Karlsruhe (DE); KRUSE, Michael, 77815 Buehl (DE); SCHABANEL, François, F-94100 Saint Maur des Fossés (FR)
(86) Internationale Anmeldenummer: PCT/EP2007/060314
(87) Internationale Veröffentlichungsnummer: WO 2008/040683

(56) Entgegenhaltungen:
- FR-A- 2 872 756
- GB-A- 2 029 691
- US-A- 2 691 186
- US-A- 2 829 394

## Beschreibung

### Stand der Technik

Die vorliegende Erfindung betrifft eine Anordnung einer Einrichtung an einem Fahrzeug zum Reinigen bzw. Wischen einer Scheibe eines Fahrzeugs und ein Fahrzeug mit einer Seitenwischanlage.

Insbesondere bei stark gekrümmten Panoramascheiben liegen mehr oder weniger großflächige Seitenflächen zur A-Säule hin vor, die von einer konventionellen zentralen Wischanlage nicht erreicht werden können. Eine gute Sicht gerade durch diese Seitenflächen ist aber wünschenswert, da in diesen Seitenbereichen oftmals ein wesentliches Verkehrsgeschehen zu beobachten ist.

Aus FR 2872756 A ist eine Einrichtung zum Wischen einer Scheibe eines Fahrzeugs bekannt, wobei die Einrichtung zusätzlich zu einer herkömmlichen zentralen Wischanlage vorgesehen ist und ausschließlich zum Wischen von Seitenbereichen der Scheibe dient, welche nicht von der zentralen Wischanlage erfasst werden. Eine entsprechende Einrichtung zum Reinigen und Wischen einer Scheibe ist zudem aus US 2,691,186 A bekannt. Erfindungsgemäß ist eine Anordnung mit den Merkmalen des Anspruchs 1 vorgesehen.

### Vorteile der Erfindung

Die erfindungsgemäße Anordnung einer Einrichtung an einem Fahrzeug zum Reinigen bzw. Wischen einer Scheibe eines Fahrzeugs hat demgegenüber den Vorteil, dass die teilweise stark gekrümmten Seitenflächen zur A-Säule hin gut gereinigt werden, die von einer konventionellen zentralen Wischanlage nicht erreicht werden können. Die Anlage ist vorzugsweise lediglich für den sporadisch arbeitenden Betrieb vorgesehen und dient ausschließlich dem Waschen und Sauberhalten der Seitenflächen bzw. seitlichen Dreiecke. Der Betrieb mittels der erfindungsgemäßen Einrichtung ist nicht für einen Dauerbetrieb, wie Intervall, Stufe 1 oder Stufe 2, vorgesehen, sondern wird nur bei Bedarf bzw. verschmutzten Seitenflächen entsprechend aktiviert. Von Vorteil ist, dass die Einrichtung mit ihrem flexiblen Wischgummi sich nahezu an jede Scheibenkontur anpasst, insbesondere an eine stark gekrümmte. Die dadurch erzielte große Variabilität macht den Einsatz für verschiedenste Ausführungen von Panoramascheiben möglich. Der erforderliche Bauraum der Einrichtung gestaltet sich dabei vorteilhafterweise verhältnismäßig gering. Neben der Beseitigung von groben Verschmutzungen unterstützt die Einrichtung weiterhin die Wasserabfuhr.

Erfindungsgemäß umfasst die Einrichtung zwei, an der Scheibe verbaute Seitenwischanlagen, wobei für jeden dreieckförmigen Seitenbereich der Scheibe jeweils eine Seitenwischanlage mit Wischgummi zum Reinigen bzw. Wischen des dreieckförmigen Seitenbereichs der Scheibe vorgesehen ist. Dies ermöglicht eine effektive Reinigung der dreieckförmigen, in der Regel stark gekrümmten Seitenbereichen der Scheibe.

Erfindungsgemäß ist die Anordnung derart ausgeführt, dass die jeweilige Seitenwischanlage ihren Drehpunkt für ein Gelenkteil an einem oberen Ende einer A-Säule des Fahrzeugs aufweist, wobei das Gelenkteil über ein am Gelenkteil gehaltenes Befestigungsteil ausgelenkt wird, das entlang einem unteren Scheibenrand der Scheibe verfährt. Damit ergibt sich eine von außen relativ wenig sichtbare Einrichtung.

Weitere Vorteile und vorteilhafte Ausgestaltungen der Erfindung ergeben sich aus den Unteransprüchen und der Beschreibung.

Von Vorteil sind unterschiedliche konstruktive Ausgestaltungen des Verfahrwegs des Befestigungsteils.

So kann zum Antrieb des Befestigungsteils ein Elektromotor vorgesehen werden, der ein Ritzel antreibt, das in eine an einer Scheibeninnenseite vorgesehene Verzahnung eingreift und so das mit dem Elektromotor verbundene Befestigungsteil antreibt. Sehr vorteilhaft und einfach zu bewerkstelligen ist, die Verzahnung aus Kunststoff herzustellen und einfach an der Scheibeninnenseite zu kleben. Dies bringt außerdem den Vorteil mit sich, dass der dann innenliegende Elektromotor stets spritzwassergeschützt ist und sich verringerte Anforderungen an seine Dichtheit ergeben.

Zur Positionsbestimmung des Elektromotors ist es vorteilhaft an der Verzahnung Positionsgeber, insbesondere in Form von Magneten, vorzusehen.

Ein vorteilhafter Antrieb des Befestigungsteils kann in Form eines von einem Elektromotor angetriebenen Seiltriebs bestehen.

Ein vorteilhafter Antrieb des Befestigungsteils kann in Form eines von einem Elektromotor angetriebenen Linearantriebs bestehen.

Ein vorteilhafter Antrieb des Befestigungsteils kann in Form einer von einem Elektromotor angetriebenen Gewindestange bestehen, die in Verbindung mit einem Träger zu einem Verschieben des Befestigungsteils führt.

Eine vorteilhafte, einfache zu realisierende und robuste Konstruktion des Gelenkteils ergibt sich, wenn das Gelenkteil aus einer einen konventionellen Wischgummi aufnehmenden Federschiene besteht, die beidseitig in jeweils einem Führungselement geführt ist, wobei ein erstes Führungselement an dem Drehpunkt an dem oberen Ende der A-Säule angebracht und ein zweites Führungselement an dem entlang des unteren Scheibenrands der Scheibe verfahrbaren Befestigungsteil angebracht ist.

Sehr vorteilhaft ist, den Wischgummi über insgesamt vier Umlenkrollen zu führen, wobei im Gelenkteil drei Umlenkrollen und an dem Drehpunkt des Gelenkteils an dem oberen Ende der A-Säule eine vierte Umlenkrolle vorgesehen sind, die den Wischgummi unter Spannung halten.

Ebenfalls sehr vorteilhaft ist, den Wischgummi über insgesamt vier Umlenkrollen zu führen, wobei im Gelenkteil eine Umlenkrolle und im Befestigungsteil zwei Umlenkrollen und an dem Drehpunkt des Gelenkteils an dem oberen Ende der A-Säule eine vierte Umlenkrolle vorgesehen sind, die den Wischgummi unter Spannung halten.

Vorteilhaft ist, um ein beständiges Spannen und Entspannen des Wischgummis zu erzielen, wenn die im Gelenkteil vorgesehene erste Umlenkrolle durch Federspannung verschiebbar gehalten ist. Zur optimalen Führung des Wischgummis können einfach im Gelenkteil mehrere Führungskrallen vorgesehen werden.

Eine leichte und stabile Konstruktion wird erzielt, wenn das Gelenkteil einen versteiften Rahmen mit Strukturversteifungen aufweist.

Sehr vorteilhaft ist, dass das hohle Gelenkteil von einem Deckel verschließbar ist. Dies ermöglicht sehr einfach, den Deckel verschiedenfarbig zum Beispiel nach Kundenwunsch zu lackieren, so dass die Möglichkeit unterschiedlicher Designs besteht.

Zum sicheren Wischen in der Winterzeit kann das Gelenkteil bzw. der Hebel oder Arm vorteilhafterweise elektrisch beheizbar gestaltet sein.

In allen gezeigten Vorschläge können Wasch-Spritzdüsen integriert werden, wie im Gelenkteil bzw. im Hebel oder Arm. Die Wasch-Spritzdüsen können in Abhängigkeit von Bewegung und Erreichen der Endposition (Umkehr- und Parkposition) des Gelenkteils bzw. Hebels oder Arms angesteuert und entsprechend dem Wischfeld ausgerichtet, ihr Waschmittel abgeben.

### Zeichnung

Ausführungsbeispiele der Erfindung sind in der nachfolgenden Beschreibung näher erläutert und anhand der Zeichnung weiter verdeutlicht.

Es zeigen:
- Fig. 1: eine Scheibe eines Fahrzeugs mit konventioneller zentraler Wischanlage, welche um die erfindungsgemäße Einrichtung ergänzt ist,
- Fig. 2: eine Scheibe des Fahrzeugs mit konventioneller Wischanlage ausgeführt als Gegerilaufanlage mit ihrem Wischfeld, das durch ein Wischfeld der erfindungsgemäßen Einrichtung ergänzt wird, die auf der rechten Seite (links vom Fahrer) in ihrer Parkposition PP und auf der linken Seite (rechts vom Fahrer) in ihrer Umkehrposition gezeigt ist,
- Fig. 3: eine Darstellung der Einrichtung gemäß einem ersten Ausführungsbeispiel,
- Fig. 4: eine detaillierte konstruktive Ausführung des ersten Ausführungsbeispiels nach Fig. 3,
- Fig. 5: ein zweites Ausführungsbeispiel der erfindungsgemäßen Einrichtung in perspektivischer Ansicht und im Querschnitt,
- Fig. 6: eine Draufsicht und ein Schnitt der Einrichtung gemäß Fig. 5,
- Fig. 7: eine Ausführung des Verfahrwegs des Befestigungsteils an der Scheibe,
- Fig. 8: eine Innenansicht der Scheibe nach Fig. 7,
- Fig. 9: ein Seilantrieb mit Blick auf die Scheibe,
- Fig. 10: verschiedene Schnitte des Seilantriebs nach Fig. 9,
- Fig. 11: verschiedene Schnitte eines Linearantriebs,
- Fig. 12: verschiedene Schnitte eines Gewindestangenantriebs und
- Fig. 13: schematisch vereinfachte Darstellungen der Erfindung

### Ausführungsformen der Erfindung

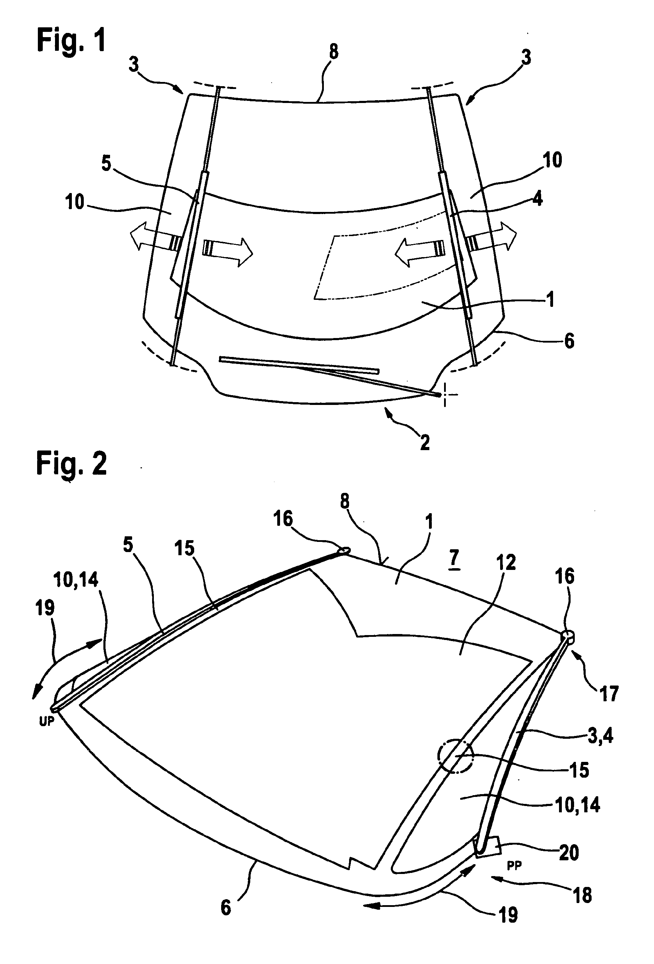

Die Fig. 1 zeigt eine Scheibe 1 eines nur teilweise angedeuteten Fahrzeugs, das mit einer konventionellen zentralen Wischanlage 2 ausgestattet ist, die mit der erfindungsgemäßen Einrichtung 3 ergänzt ist. Die Einrichtung 3 umfasst zwei, an der Scheibe 1 verbaute Seitenwischanlagen 4, 5, wobei für jeden dreieckförmigen Seitenbereich 10 der Scheibe 1 jeweils eine Seitenwischanlage 4; 5 zum Reinigen bzw. Wischen eines dreieckförmigen Seitenbereichs 10 der Scheibe 1 vorgesehen ist. Die dreieckförmigen Seitenbereiche 10 sind in der Regel stark gekrümmt bzw. abgebogen, wie es zum Beispiel bei Panoramascheiben der Fall ist.

Wie die Fig. 2 zeigt, wird ein Wischfeld 12 der zum Beispiel als Gegenlaufanlage ausgeführten konventionellen Wischanlage 2 von dreieckförmigen Wischfeldern 14 der erfindungsgemäßen Einrichtung 3 bzw. der Seitenwischanlagen 4, 5 ergänzt, wobei die eine Seitenwischanlage 4 auf der rechten Seite in Fig. 2 (links vom Fahrer) in ihrer Parkposition PP und die andere Seitenwischanlage 5 auf der linken Seite in Fig. 2 (rechts vom Fahrer) in ihrer Umkehrposition UP gezeigt ist. Jedoch verbleiben beim Wischen zwischen den beiden Wischfeldern 12, 14 Restbänder 15, die in Fig. 2 durch einen Kreis näher verdeutlicht sind. Die Restbänder 15 bzw. ungewischten Streifen können mit Hilfe von Motoren mit Reversiertechnik durch eine Erweiterung des Basis-Wischfeldes 12 gewischt werden. Diese Erweiterung des Wischfeldes 12 kann mittels der Basis-Zwei-Motoren-Wischanlage 2 vorgenommen werden. Durch eine aufeinander abgestimmte Einstellung der Motoren der Basis-Wischanlage 2 mit der erfindungsgemäßen Einrichtung 3 bzw. den Seitenwischanlagen 4, 5 wird eine Kollision verhindert. Dabei ist die geringe Wischfrequenz der Seitenwischanlagen 4, 5 zu berücksichtigen, die zum Beispiel als Stellmotor ausgeführt und ausschließlich für den sporadischen Betrieb ausgelegt sind. Neben dem Geräusch der Seitenwischanlagen 4, 5 kommen zusätzliche Windgeräusche. In diesem Zusammenhang ist bei einer Einführung der Seitenwischanlagen 4, 5 die erforderliche Genehmigung des Gesetzgebers einzuholen. Weitere Punkte sind außerdem wichtig, wie die Anfälligkeit für Schwingungen/Resonanz, der Wasserrückzug, die variable Gummilänge bzw. der Ausdehnungskoeffizient, die Reibung und das sich daraus ergebende erforderliche Antriebsmoment, das Verhalten auf trockener Scheibe 1 und die Waschleistung der Seitenwischanlagen 4, 5.

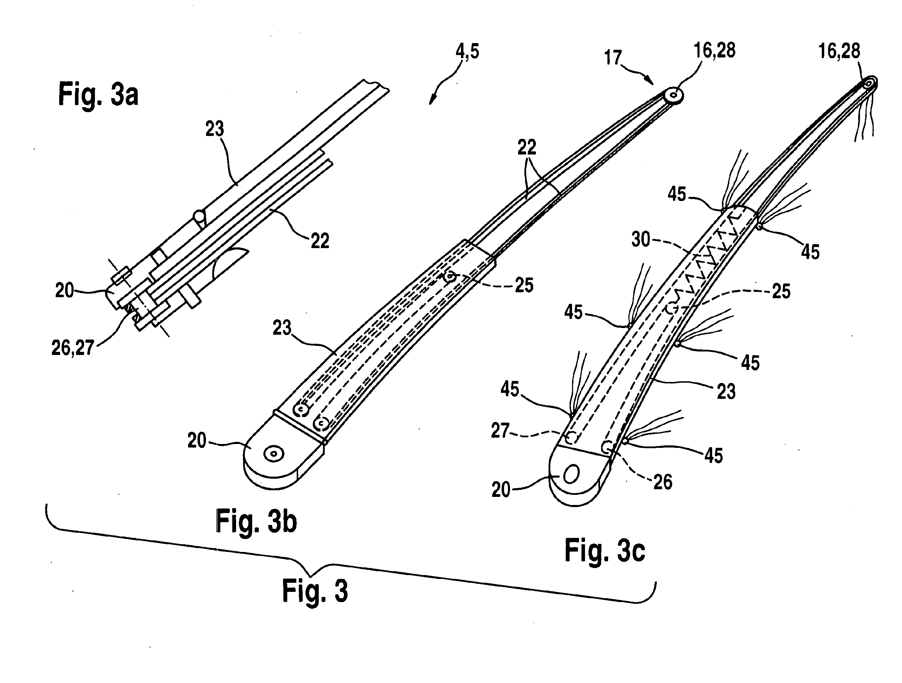

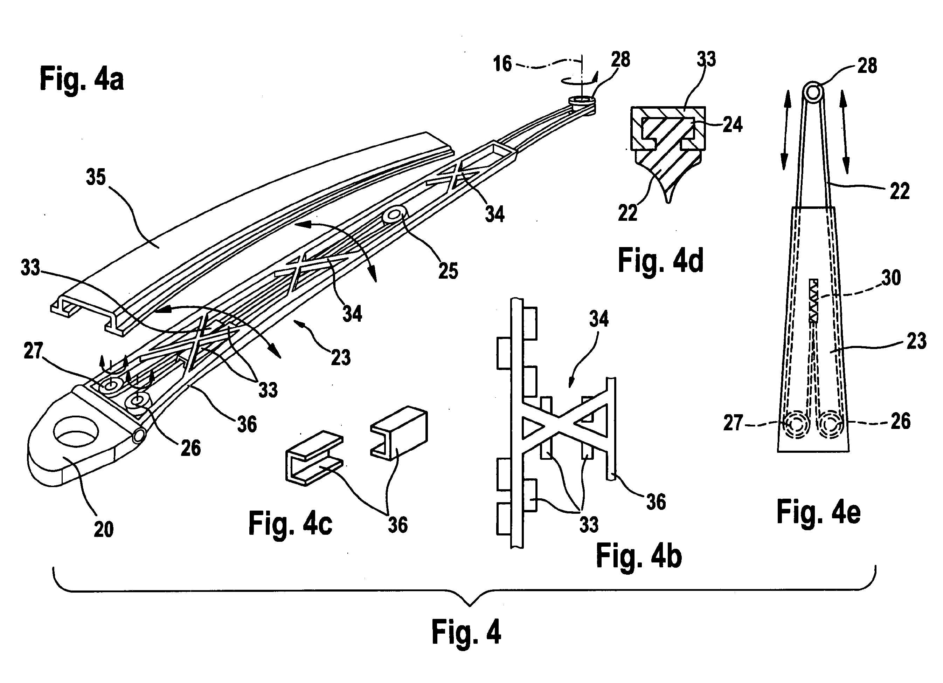

Die Seitenwischanlagen 4, 5 weisen gemäß erstem Ausführungsbeispiel ihren fixen Drehpunkt 16 an einem oberen Ende 17 einer nicht näher dargestellten A-Säule des Fahrzeugs auf. An einem unteren Ende 18 der Scheibe 1 verfährt an einem unteren Scheibenrand 6 der Scheibe 1, durch einen Pfeil 19 angedeutet, eine im Folgenden Befestigungsteil 20 genannte Gegenhalterung für die in den Fig. 3, 4 näher dargestellten Wischgummis 22 der Seitenwischanlagen 4, 5. Wie die Fig. 3, 4 zeigen, befindet sich an dem verfahrbaren Befestigungsteil 20 ein Gelenkteil 23. In dem Gelenkteil 23 erfolgt das Spannen und die Umlenkung des Wischgummis 22. Da der Wischgummi 22 bei statischer Lagerung eine erhebliche Dehnung erfahren würde, ist eine variable obere Spanneinheit vorgesehen. Diese Spanneinheit besteht zum Beispiel aus einer ersten Umlenkrolle 25, die beispielsweise gegen Federspannung verschieblich gelagert ist. Hierzu greift eine am Gelenkteil 23 befestigte Feder 30 an der ersten Umlenkrolle 25 an. Eine zweite und dritte Umlenkrolle 26, 27 sind nahe dem Befestigungsteil 20 im Gelenkteil 23 untergebracht. Eine vierte Umlenkrolle 28 befindet sich an einem dachseitigen Ende der A-Säule bzw. in Nähe eines oberen Scheibenrands 8 der Scheibe 1 bzw. an einem Dach 7 des Fahrzeugs. Der Wischgummi 22 ist somit über vier Punkte gespannt, so dass bei einer Auslenkung des Gelenkteils 23 bzw. Längung eine möglichst gleichbleibende Spannung aufrechterhalten wird, die mit einer entsprechenden Längung bzw. Spannen der Feder 30 an der ersten Umlenkrolle 25 einhergeht.

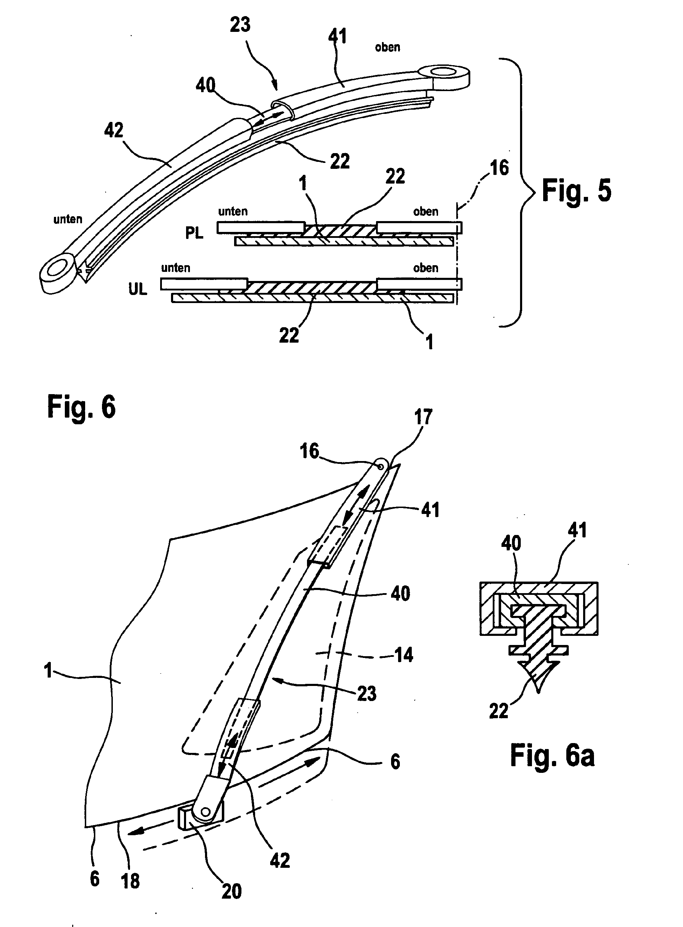

Wie die Fig. 3a, ein Schnitt durch das Gelenkteil 23 in einer gegenüber den Fig. 3b und 3c veränderten Ausführung, zeigt, können die zwei Umlenkrollen 26, 27 auch im Befestigungsteil 20 selbst untergebracht sein. Zur Führung des Wischgummis 22 sind im Gelenkteil 23 U- oder C-förmige in Fig. 4c und im Schnitt der Fig. 4d gezeigte Führungselemente bzw. Führungskrallen 33 vorgesehen, sowie Führungsschienen 36. Die Führungskrallen 33 führen das Gummiprofil des Wischgummis 22 an seinen Schultern 24 verschieblich. Die Ausbildung entspricht weitestgehend den heutigen Krallenbügeln, in denen das Gummiprofil geführt wird, wobei auf eine innenliegende Federschiene 40 (siehe Fig. 6a) verzichtet wird. Die Führung des Wischgummis 22 erfolgt neben den Führungskrallen 33 insgesamt über vier Umlenkrollen 25 bis 28 und seitlich in den U-förmigen Führungsschienen 36, die in Fig. 4c perspektivisch dargestellt sind. Das Gelenkteil 23 besteht im Wesentlichen aus einem versteiften Rahmen, der zum Beispiel über drei kreuzförmige Strukturversteifungen 34 verfügt, wobei diese in Fig. 4b in einen vergrößerten Ausschnitt gezeigt sind. An den Strukturversteifungen 34 können die Führungskrallen 33 befestigt sein, die, wie die Fig. 4b zeigt, zueinander versetzt angeordnet sind. Das Gelenkteil 23 besteht im Wesentlichen aus einem versteiften Rahmen aus Metall oder Kunststoff. Das Gelenkteil 23 ist von einem zum Beispiel rastbar befestigbarem Deckel 35 verschließbar, der vorzugsweise ebenfalls aus Kunststoff besteht. Der Deckel 35 kann verschiedenfarbig zum Beispiel nach Kundenwunsch lackiert werden, so dass die Möglichkeit unterschiedlicher Designs besteht. In einer weiteren Ausführung können das Gelenkteil 23 und der Deckel 35 auch einteilig, beispielsweise als Kunststoffteil ausgebildet sein.

Wie die Fig. 3c zeigt, können im Gelenkteil 23 in der Struktur an verschiedenen Stellen Wasch-Spritzdüsen 45 installiert sein. Diese können in Abhängigkeit von Bewegung und Erreichen der Endposition (Umkehr- und Parkposition) des Gelenkteils 23 angesteuert und entsprechend dem Wischfeld ausgerichtet, ihr Waschmittel abgeben.

In den Fig. 5 und 6 ist nach einem zweiten erfindungsgemäßen Ausführungsbeispiel eine alternative Lösung zu dem ersten Ausführungsbeispiel nach Fig. 4 und 5 mit der variablen oberen Spanneinheit bzw. der ersten federvorgespannten Umlenkrolle 25 aufgezeigt. Alternativ wird eine Federschiene vorgeschlagen, bei der das Gelenkteil 23 aus einer einen konventionellen Wischgummi 22 aufnehmenden Federschiene 40 besteht, die beidseitig in jeweils einem Führungselement geführt ist, wobei ein erstes Führungselement 41 an dem Drehpunkt 16 an dem oberen Ende 17 der A-Säule drehbar angebracht und ein zweites Führungselement 42 an dem entlang des unteren Scheibenrands 6 der Scheibe 1 verfahrbaren Befestigungsteil 20 drehbar angebracht sind. Das von der Scheibenwaschanlage 4; 5 abgedeckte dreieckförmige Wischfeld 14 ist in Fig. 6 gestrichelt eingezeichnet. Wie die Fig. 6 zeigt, ist der Wischgummi 22 als konventionelles Wischblatt 22 ausgeführt und anhand der Federschiene 40 zwischen den beiden Führungselementen 41, 42 geführt. Die Fig. 5 zeigt im Querschnitt das Gelenkteil 23 in seinen zwei Positionen, der Parklage PL und der Umkehrlage UL. In einer Abwandlung ist es auch möglich, am Gelenkteil 23 bzw. in der Federschiene 40 zwei Wischblätter bzw. Wischgummis 22 vorzusehen, um so das Wischfeld vergrößern zu können. In einer Abwandlung kann sich die Federschiene 40 über beidseitig vorgesehene Federn in den Führungselementen 41 selbst abstützen. Dies würde eine mittige Anordnung garantieren. Möglich ist auch, dass bei einer Ausführung ohne Federn, die Federschiene 40 beispielsweise im unteren Führungselement 42 ständig anliegt oder fixiert ist und nur im oberen Führungselement 41 sich relativ bewegt.

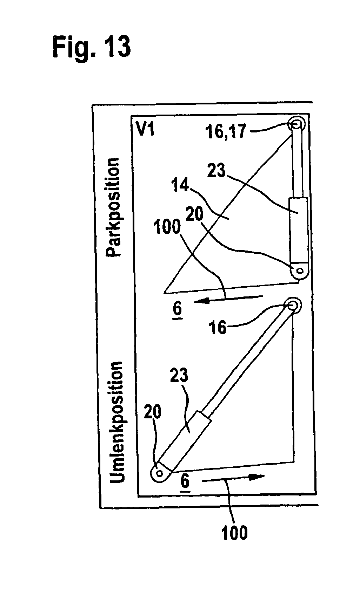

Dem ersten und zweiten Ausführungsbeispiel ist gemeinsam, ein Befestigungsteil 20, das sich, wie die Fig. 13 unter V1 zeigt, aus der Parklage in der A-Säule des Fahrzeugs heraus entlang dem unteren Scheibenrand 6 der Scheibe 1 bis zur definierten Umkehrposition bewegt und von dort wieder zurück in die Ausgangsposition fährt. Diese Bewegung erfolgt vergleichsweise langsam. Ein Positionswechsel dauert ca. 2 bis 3 Sekunden, was in etwa den Zeiten eines Fensterhebers entspricht. Gleiche und gleichwirkende Bauteile sind in den Ausführungsbeispielen mit denselben Bezugszeichen gekennzeichnet.

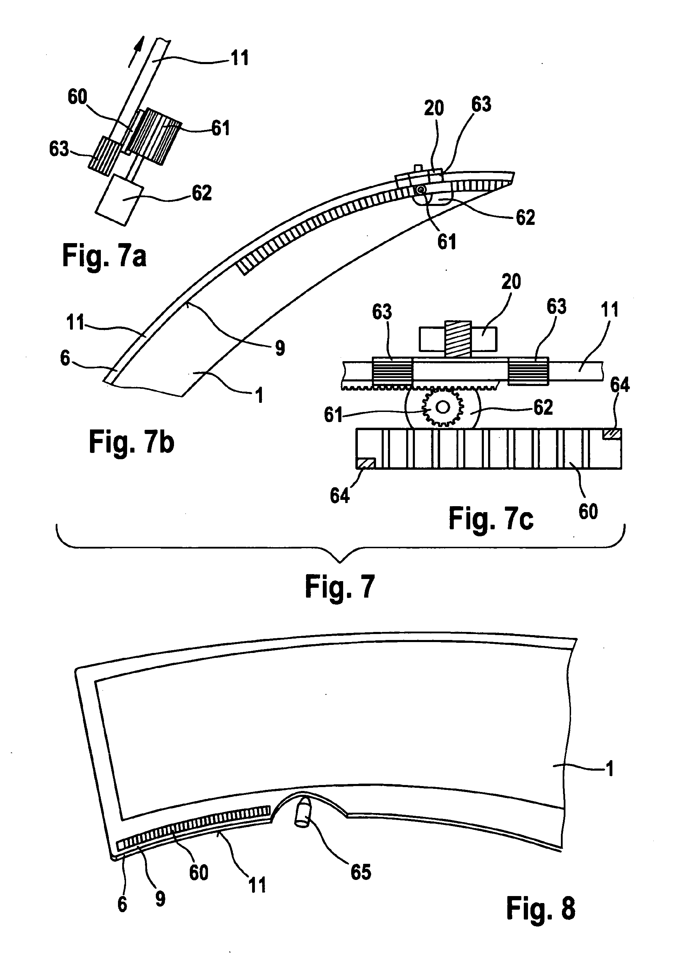

Mögliche Varianten der Realisierungen des Verfahrwegs des Befestigungsteils 20 entlang des unteren Scheibenrands 6 der Scheibe 1 werden nachfolgend in den Fig. 7 bis 17 aufgezeigt.

Die Fig. 7 und 8 zeigen eine Ausführung in Form einer Verzahnung 60 entlang der Scheibengeometrie und eines Ritzels 61. Das Ritzel 61 ist angetrieben von einem kleinen Elektromotor 62, der sich am Befestigungsteil 20 befindet. Wie die Fig. 8 zeigt, ist die Verzahnung 60 am unteren inneren Scheibenrandbereich bzw. an einer Scheibeninnenseite 9 beispielsweise aufgeklebt. Die Verzahnung 60 ist vorzugsweise aus Kunststoff gefertigt. Das Ritzel 61 wird vom Elektromotor 62 angetrieben und greift dabei in die an der Scheibeninnenseite 9 vorgesehene Verzahnung 60 ein. Das Befestigungsteil 20 weist zwei Schienenelemente 63 auf, die an der Schmalseite der Scheibe 1 bzw. direkt am Außenrand 11 der Scheibe 1 wie eine Klammer angreifen. Wie die Fig. 7a und 7b von unten auf die Scheibe 1 her gesehen und die Fig. 7c mit Sicht auf den Außenrand 11 der Scheibe 1 zeigen, läuft der Elektromotor 62 quasi als bewegliches Klammerelement unterhalb der Scheibe 1 an der Innenseite der Scheibe 1 entlang, wobei das Befestigungsteil 20 am Elektromotor 62 angebracht ist. Dies bringt den Vorteil mit sich, dass der innenliegende Elektromotor 62 stets spritzwassergeschützt ist und sich verringerte Anforderungen an seine Dichtheit ergeben.

Wie die Fig. 7c zeigt, sind die Endlagen der Verzahnung mit Positionsgebern, insbesondere in Form von Magneten 64, ausgestattet. Sie dienen dazu, dem Elektromotor 62 jeweils die Endlagen der Verzahnung 60 mitzuteilen, so dass die Umkehr der Bewegungsrichtung, beispielsweise von der Parkposition zur Umkehrposition und umgekehrt, eingeleitet werden kann. Aber auch andere Methoden zur Positionsbestimmung des Elektromotors 62 sind denkbar, wie eine optische oder mechanische Wegmessung. Wie die Fig. 8 zeigt, befindet sich neben der Verzahnung 60 in einer halbkreisförmigen Aussparung in der Mitte der Scheibe 1 die Wischerachse 65 des primären Wischers 2.

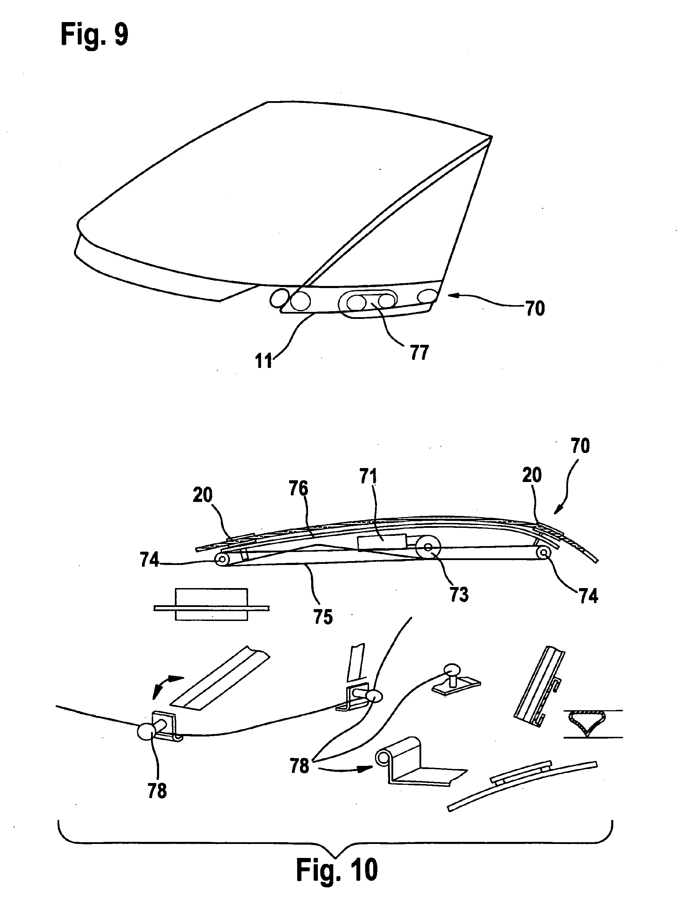

Die Fig. 9 und 10 zeigen einen weiteren Antrieb des Befestigungsteils 20 in Form eines Seiltriebs 70, wie er auch bei elektrischen Fensterhebern ausgeführt ist. In der Fig. 10 ist ein Träger 77 für das Befestigungsteil 20 gezeigt. Je nachdem wie die Wicklungsrichtung ist, bewegt sich der Träger 77 mit dem Befestigungsteil 20 nach links oder rechts (Prinzip des Fidelbogens). Wie die Fig. 10 weiter zeigt, treibt ein Elektromotor 71 über ein Schnecken/Stirnradgetriebe eine Seiltrommel 73 an. An der Seiltrommel 73 sind die beiden Enden eines Stahlseils so angeschlagen, dass bei Drehung das eine Ende auf- und das andere abgewickelt wird. Das Zugseil 75 zieht über Umlenkrollen 74, beispielsweise in einer Führungsschiene 76, das am Außenrand 11 der Scheiben 1 geführte Befestigungsteil 20, wobei das Seilende ohne Zug wieder auf die Seiltrommel 73 aufgewickelt wird. In Fig. 10 sind zwei mögliche Stellungen des Befestigungsteils 20 gezeigt. Ferner zeigt die Fig. 10 mögliche Befestigungen des Gelenkteils 23 an das Befestigungsteil 20, beispielsweise mittels Kugelzapfen 78. Durch Kugelzapfen 78 ist ein weiterer Freiheitsgrad möglich, und zwar das Kippen zur Scheibe hin und insbesondere das Kippen zur Seite parallel zur Scheibenebene. Damit ergibt sich die Ausrichtung des Gelenkteils 23 entlang einer kürzesten Verbindung zum oberen Umlenkpunkt.

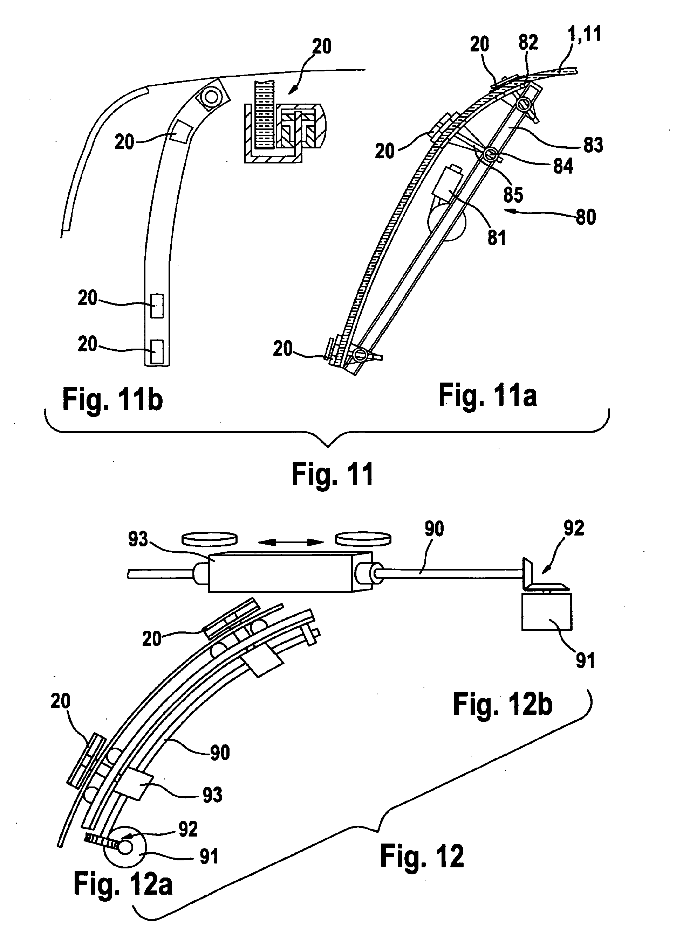

Die Fig. 11 zeigt einen Antrieb des Befestigungsteils 20 in Form eines Linearantriebs 80 bzw. Linearführung. Als Linearantrieb oder Linearantriebssystem werden alle Antriebssysteme bezeichnet, die zu einer translatorischen Bewegung führen. Linearantriebe ermöglichen die Bewegung von Maschinenelementen in gerader Linie oder einem anderen vorgegebenen Verlauf. In der rechten Fig. 11a sind die drei Stellungen des Befestigungsteils 20 mit seinem Träger 85 gezeigt. Das Befestigungsteil 20 wird am Außenrand 11 der Scheibe 11 quasi geklammert, verschieblich befestigt und bewegt sich über eine am Träger 85 vorgesehene drehbewegliche Stange 82, die in einem Lagerelement 84 einer Schiene 83 aufgenommen ist und so in der Schiene 83 in Längsrichtung verschoben werden kann. Zum Antrieb ist ein Elektromotor 81 vorgesehen, der beispielsweise über einen Seilzug am Lagerelement 84 angreifend, die Stange 82 in der Schiene 83 und damit über den Träger 85 das Befestigungsteil 20 an der Scheibe 1 bewegt. Bei der Stange 82 kann es sich um ein Teleskopelement handeln, um einen Ausgleich der Abstandsveränderung der Scheibe 1 zum Antrieb bzw. Lagerelement 84 herzustellen. Anstelle des Seiltriebs ist es auch möglich, dass der Elektromotor 81 sich in der Schiene 83 selbst verfährt und dabei das am Elektromotor 81 gehaltene Befestigungsteil 20 über die Scheibe 1 mitnimmt.

Die Fig. 12 zeigt einen Antrieb des Befestigungsteils 20, der gemäß Fig. 12a in Form einer gebogenen Gewindestange 90 oder gemäß Fig. 12b in Form einer geraden Gewindestange 90 ausgeführt ist. Das Befestigungsteil 20 ist in Fig. 12a in zwei möglichen Stellungen gezeigt. Die Gewindestange 90 wird von einem Elektromotor 91 über ein Kegelradgetriebe 92 angetrieben. Ein in der Gewindestange 90 laufender Träger 93 für das Befestigungsteil 20 wird dabei durch Drehen der Gewindestange 90 entsprechend verschoben. Die Führung des Trägers 93 kann durch eine Kugelführung erfolgen oder durch ein Teleskopelement wie in Fig. 11a.

Selbstverständlich sind neben den aufgeführten Antrieben für das Befestigungsteil 20 nach Fig. 7 bis 12 auch andere Antriebe bzw. Anordnungen möglich, die zu einer veränderten Bewegungsrichtung des Befestigungsteils 20 führen.

Die V1 in Fig. 13 verdeutlicht das erste und zweite Ausführungsbeispiel, bei dem der Verfahrweg des Befestigungsteils 20 entlang der unteren Scheibengeometrie 6, wie dies entsprechende Pfeile 100 kennzeichnen.

Ein Vorteil der erfindungsgemäßen Einrichtung 3 mit einem flexiblen Wischgummi 22 liegt in ihrer Anpassungsfähigkeit an nahezu jede Scheibenkontur bzw. Scheibenwölbung. Die dadurch erzielbare Variabilität macht den Einsatz für verschiedenste Ausführungen von Panoramascheiben möglich. Der Bauraum gestaltet sich dabei verhältnismäßig gering. Neben der Beseitigung von groben Verschmutzungen unterstützt die Einrichtung 3 weiterhin die Wasserabfuhr von der Scheibe 1. Durch das Integrieren der Wasch-Spritzdüsen 45 im Gelenkteil 23 ist eine vollwertige Wascheinrichtung realisierbar.

## Patentansprüche

1. Anordnung einer Einrichtung an einem Fahrzeug zum Reinigen bzw. Wischen einer Scheibe des Fahrzeugs, wobei die Einrichtung (3) ausschließlich zum Reinigen bzw. Wischen von insbesondere gekrümmten Seitenbereichen (10) der Scheibe (1) dient, welche nicht von einer herkömmlichen zentralen Wischanlage (2) erfassbar sind, wobei die Einrichtung (3) zwei, an der Scheibe (1) verbaute Seitenwischanlagen (4, 5) umfasst, wobei für jeden dreieckförmigen Seitenbereich (10) der Scheibe (1) jeweils eine Seitenwischanlage (4; 5) mit Wischgummi (22) zum Reinigen bzw. Wischen des dreieckförmigen Seitenbereichs (10) der Scheibe (1) vorgesehen ist, **dadurch gekennzeichnet, dass** die jeweilige Seitenwischanlage (4; 5) ihren Drehpunkt (16) für ein Gelenkteil (23) an einem oberen Ende (17) einer A-Säule des Fahrzeugs aufweist, wobei das Gelenkteil (23) über ein am Gelenkteil (23) gehaltenes Befestigungsteil (20) ausgelenkt wird, das entlang einem unteren Scheibenrand (6) der Scheibe (1) verfährt.

2. Anordnung nach Anspruch 1, **dadurch gekennzeichnet, dass** zum Antrieb des Befestigungsteils (20) ein Elektromotor (62) vorgesehen ist, der ein Ritzel (61) antreibt, das in eine an einer Scheibeninnenseite (9) vorgesehene Verzahnung (60) eingreift und so das mit dem Elektromotor (62) verbundene Befestigungsteil (20) antreibt.

3. Anordnung nach Anspruch 2, **dadurch gekennzeichnet, dass** die Verzahnung (60) aus Kunststoff besteht und an der Scheibeninnenseite (9) geklebt befestigt ist.

4. Anordnung nach Anspruch 2 oder 3, **dadurch gekennzeichnet, dass** zur Positionsbestimmung des Elektromotors (62) an der Verzahnung (60) Positionsgeber, insbesondere in Form von Magneten (64), vorgesehen sind.

5. Anordnung nach Anspruch 1, **dadurch gekennzeichnet, dass** zum Antrieb des Befestigungsteils (20) ein von einem Elektromotor (71) angetriebener Seiltrieb (70) vorgesehen ist.

6. Anordnung nach Anspruch 1, **dadurch gekennzeichnet, dass** zum Antrieb des Befestigungsteils (20) ein von einem Elektromotor (81) angetriebener Linearantrieb (80) vorgesehen ist.

7. Anordnung nach Anspruch 1, **dadurch gekennzeichnet, dass** zum Antrieb des Befestigungsteils (20) eine von einem Elektromotor (91) angetriebene Gewindestange (90) vorgesehen ist, die in Verbindung mit einem Träger (93) zu einem Verschieben des Befestigungsteils (20) führt.

8. Anordnung nach einem der Ansprüche 2 bis 7, **dadurch gekennzeichnet, dass** das Gelenkteil (23) aus einer einen konventionellen Wischgummi (22) aufnehmenden Federschiene (40) besteht, die beidseitig in jeweils einem Führungselement (41, 42) geführt ist, wobei ein erstes Führungselement (41) an dem Drehpunkt (16) an dem oberen Ende (17) der A-Säule angebracht und ein zweites Führungselement (42) an dem entlang des unteren Scheibenrands (6) der Scheibe (1) verfahrbaren Befestigungsteil (20) angebracht ist.

9. Anordnung nach einem der Ansprüche 2 bis 7, **dadurch gekennzeichnet, dass** der Wischgummi (22) über insgesamt vier Umlenkrollen (25, 26, 27, 28) geführt ist, wobei im Gelenkteil (23) drei Umlenkrollen (25, 26, 27) und an dem Drehpunkt (16) des Gelenkteils (23) an dem oberen Ende (17) der A-Säule eine vierte Umlenkrolle (28) vorgesehen sind, die den Wischgummi (22) unter Spannung halten.

10. Anordnung nach einem der Ansprüche 2 bis 7, **dadurch gekennzeichnet, dass** der Wischgummi (22) über insgesamt vier Umlenkrollen (25, 26, 27, 28) geführt ist, wobei im Gelenkteil (23) eine Umlenkrolle (25) und im Befestigungsteil (20) zwei Umlenkrollen(26, 27) und an dem Drehpunkt (16) des Gelenkteils (23) an dem oberen Ende (17) der A-Säule eine vierte Umlenkrolle (28) vorgesehen sind, die den Wischgummi (22) unter Spannung halten.

11. Anordnung nach Anspruch 9 oder 10, **dadurch gekennzeichnet, dass** die im Gelenkteil (23) vorgesehene erste Umlenkrolle (25) durch Federspannung verschiebbar gehalten ist.

12. Anordnung nach einem der Ansprüche 9 bis 11, **dadurch gekennzeichnet, dass** das Gelenkteil (23) zur Führung des Wischgummis (22) im Gelenkteil (23) vorgesehene Führungskrallen (33) aufweist.

13. Anordnung nach einem der Ansprüche 9 bis 12, **dadurch gekennzeichnet, dass** das Gelenkteil (23) einen versteiften Rahmen mit Strukturversteifungen (34) aufweist.

14. Anordnung nach einem der Ansprüche 9 bis 13, **dadurch gekennzeichnet, dass** das Gelenkteil (23) von einem Deckel (35) verschließbar ist.

15. Anordnung nach einem der Ansprüche 9 bis 14, **dadurch gekennzeichnet, dass** das Gelenkteil (23) elektrisch beheizbar gestaltet ist.

16. Anordnung nach einem der Ansprüche 9 bis 15, **dadurch gekennzeichnet, dass** das Gelenkteil (23) Wischwasserspritzdüsen (45) aufweist.

## Claims

1. Arrangement of an apparatus on a vehicle for cleaning and/or wiping a windscreen of the vehicle, wherein the apparatus (3) serves exclusively for cleaning and/or wiping in particular curved side regions (10) of the windscreen (1) which are unable to be covered by a conventional, central wiper system (2), wherein the apparatus (3) comprises two side wiper systems (4, 5) which are installed on the windscreen (1), wherein each triangular side region (10) of the windscreen (1) is provided with a side wiper system (4; 5) with a wiper blade rubber (22) for cleaning and/or wiping the triangular side region (10) of the windscreen (1), **characterized in that** the respective side wiper system (4; 5) has its pivot point (16) for an articulated part (23) at an upper end (17) of an A pillar of the vehicle, wherein the articulated part (23) is deflected via a fastening part (20) which is held on the articulated part (23) and moves along a lower border (6) of the windscreen (1).

2. Arrangement according to Claim 1, **characterized in that** an electric motor (62') is provided for driving the fastening part (20), the electric motor driving a pinion (61) which engages in a toothing (60) provided on an inner side (9) of the windscreen and thus drives the fastening part (20) which is connected to the electric motor (62).

3. Arrangement according to Claim 2, **characterized in that** the toothing (60) is composed of plastic and is fastened in an adhesively bonded manner to the inner side (9) of the windscreen.

4. Arrangement according to Claim 2 or 3, **characterized in that** position sensors, in particular in the form of magnets (64), are provided for determining the position of the electric motor (62) on the toothing (60).

5. Arrangement according to Claim 1, **characterized in that** a cable drive (70) which is driven by an electric motor (71) is provided for driving the fastening part (20).

6. Arrangement according to Claim 1, **characterized in that** a linear drive (80) which is driven by an electric motor (81) is provided for driving the fastening part (20).

7. Arrangement according to Claim 1, **characterized in that** a threaded rod (90) which is driven by an electric motor (91) and, in conjunction with a carrier (93), leads to displacement of the fastening part (20) is provided for driving the fastening part (20).

8. Arrangement according to one of Claims 2 to 7, **characterized in that** the articulated part (23) consists of a spring rail (40) which receives a conventional wiper blade rubber (22) and is guided on both sides in one guide element (41, 42) in each case, wherein a first guide element (41) is fitted on the pivot point (16) at the upper end (17) of the A pillar and a second guide element (42) is fitted on the fastening part (20) which is movable along the lower border (6) of the windscreen (1).

9. Arrangement according to one of Claims 2 to 7, **characterized in that** the wiper blade rubber (22) is guided via a total of four deflecting rollers (25, 26, 27, 28), wherein three deflecting rollers (25, 26, 27) are provided in the articulated part (23) and a fourth deflecting roller (28) is provided on the pivot point (16) of the articulated part (23) at the upper end (17) of the A pillar, said deflecting rollers keeping the wiper blade rubber (22) under tension.

10. Arrangement according to one of Claims 2 to 7, **characterized in that** the wiper blade rubber (22) is guided via a total of four deflecting rollers (25, 26, 27, 28), wherein one deflecting roller (25) is provided in the articulated part (23) and two deflecting rollers (26, 27) are provided in the fastening part (20) and a fourth deflecting roller (28) is provided on the pivot point (16) of the articulated part (23) at the upper end (17) of the A pillar, said deflecting rollers keeping the wiper blade rubber (22) under tension.

11. Arrangement according to Claim 9 or 10, **characterized in that** the first deflecting roller (25), which is provided in the articulated part (23), is held in a displaceable manner by the tension of a spring.

12. Arrangement according to one of Claims 9 to 11, **characterized in that** the articulated part (23) has guide claws (33) which are provided for guiding the wiper blade rubber (22) in the articulated part (23).

13. Arrangement according to one of Claims 9 to 12, **characterized in that** the articulated part (23) has a reinforced frame with structural reinforcements (34).

14. Arrangement according to one of Claims 9 to 13, **characterized in that** the articulated part (23) can be closed by a cover (35).

15. Arrangement according to one of Claims 9 to 14, **characterized in that** the articulated part (23) is designed to be heatable electrically.

16. Arrangement according to one of Claims 9 to 15, **characterized in that** the articulated part (23) has wiping water spray nozzles (45).

## Revendications

1. Agencement d'un dispositif dans un véhicule, pour nettoyer ou essuyer une vitre du véhicule, le dispositif (3) servant exclusivement à nettoyer ou à essuyer des régions latérales (10) en particulier courbées de la vitre (1) qui ne peuvent pas être couvertes par un système d'essuie-glace central traditionnel (2), le dispositif (3) comportant deux systèmes d'essuie-glace latéraux (4, 5) installés sur la vitre (1), un système d'essuie-glace latéral respectif (4 ; 5) pourvu d'une raclette d'essuie-glace (22) pour nettoyer ou essuyer la région latérale triangulaire (10) de la vitre (1) étant prévu pour chaque région latérale triangulaire (10) de la vitre (1), **caractérisé en ce que** le système d'essuie-glace latéral respectif (4 ; 5) présente son centre de rotation (16) pour une partie d'articulation (23) à une extrémité supérieure (17) d'une colonne A du véhicule, la partie d'articulation (23) étant déviée par le biais d'une partie de fixation (20) retenue sur la partie d'articulation (23), laquelle partie de fixation se déplace le long d'un bord de vitre inférieur (6) de la vitre (1).

2. Agencement selon la revendication 1, **caractérisé en ce qu'**un moteur électrique (62) est prévu pour l'entraînement de la partie de fixation (20), lequel moteur électrique entraîne un pignon (61) qui s'engrène dans une denture (60) prévue sur un côté intérieur de la vitre (9) et entraîne ainsi la partie de fixation (20) reliée au moteur électrique (62).

3. Agencement selon la revendication 2, **caractérisé en ce que** la denture (60) est constituée de plastique et est fixée de manière collée au côté intérieur de la vitre (9).

4. Agencement selon la revendication 2 ou 3, **caractérisé en ce que** des capteurs de position, en particulier sous forme d'aimants (64), sont prévus sur la denture (60) pour la détermination de la position du moteur électrique (62).

5. Agencement selon la revendication 1, **caractérisé en ce qu'**un entraînement par câble (70) entraîné par un moteur électrique (71) est prévu pour l'entraînement de la partie de fixation (20).

6. Agencement selon la revendication 1, **caractérisé en ce qu'**un entraînement linéaire (80) entraîné par un moteur électrique (81) est prévu pour l'entraînement de la partie de fixation (20).

7. Agencement selon la revendication 1, **caractérisé en ce qu'**une tige filetée (90) entraînée par un moteur électrique (91) est prévue pour l'entraînement de la partie de fixation (20), laquelle tige filetée occasionne, en association avec un support (93), un déplacement de la partie de fixation (20).

8. Agencement selon l'une quelconque des revendications 2 à 7, **caractérisé en ce que** la partie d'articulation (23) est constituée d'un rail élastique (40) recevant une raclette, d'essuie-glace traditionnelle (22), lequel rail élastique est guidé des deux côtés dans un élément de guidage respectif (41, 42), un premier élément de guidage (41) étant monté sur le centre de rotation (16) à l'extrémité supérieure (17) de la colonne A et un deuxième élément de guidage (42) étant monté sur la partie de fixation (20) déplaçable le long du bord de vitre inférieur (6) de la vitre (1).

9. Agencement selon l'une quelconque des revendications 2 à 7, **caractérisé en ce que** la raclette d'essuie-glace (22) est guidée par le biais de quatre galets de renvoi (25, 26, 27, 28) en tout, trois galets de renvoi (25, 26, 27) étant prévus dans la partie d'articulation (23) et un quatrième galet de renvoi (28) étant prévu au centre de rotation (16) de la partie d'articulation (23) à l'extrémité supérieure (17) de la colonne A, lesquels galets de renvoi maintiennent la raclette d'essuie-glace (22) sous tension.

10. Agencement selon l'une quelconque des revendications 2 à 7, **caractérisé en ce que** la raclette d'essuie-glace (22) est guidée par le biais de quatre galets de renvoi (25, 26, 27, 28) en tout, un galet de renvoi (25) étant prévu dans la partie d'articulation (23) et deux galets de renvoi (26, 27) étant prévus dans la partie de fixation (20) et un quatrième galet de renvoi (28) étant prévu au centre de rotation (16) de la partie d'articulation (23) à l'extrémité supérieure (17) de la colonne A, lesquels galets de renvoi maintiennent la raclette d'essuie-glace (22) sous tension.

11. Agencement selon la revendication 9 ou 10, **caractérisé en ce que** le premier galet de renvoi (25) prévu dans la partie d'articulation (23) est retenu de manière déplaçable par une tension de ressort.

12. Agencement selon l'une quelconque des revendications 9 à 11, **caractérisé en ce que** la partie d'articulation (23) comprend des griffes de guidage (33) prévues dans la partie d'articulation (23) pour le guidage de la raclette d'essuie-glace (22).

13. Agencement selon l'une quelconque des revendications 9 à 12, **caractérisé en ce que** la partie d'articulation (23) comprend un cadre renforcé pourvu de renforcements structuraux (34).

14. Agencement selon l'une quelconque des revendications 9 à 13, **caractérisé en ce que** la partie d'articulation (23) peut être fermée par un couvercle (35).

15. Agencement selon l'une quelconque des revendications 9 à 14, **caractérisé en ce que** la partie d'articulation (23) est conçue de manière à pouvoir être chauffée électriquement.

16. Agencement selon l'une quelconque des revendications 9 à 15, **caractérisé en ce que** la partie d'articulation (23) comprend des gicleurs d'eau de lavage (45).
